# EUROPEAN PATENT SPECIFICATION

(11) **EP 0 692 368 B1**
(45) Date of publication and mention of the grant of the patent: **05.04.2000**
(21) Application number: 94110996.9
(22) Date of filing: 14.07.1994
(51) Int. Cl.: B29D 30/24

(54) **Tire-forming drum and method of manufacturing a green tire**
Reifenaufbautrommel und Verfahren zum Herstellen eines Rohreifens
Tambour de confection de pneumatiques et procédé de fabrication d'un pneu cru

(30) Priority: 14.07.1993 JP 17449393
(43) Date of publication of application: 17.01.1996
(73) Proprietor: BRIDGESTONE CORPORATION, Tokyo 104-0031 (JP)
(72) Inventor: Kumagai, Yuzo, Niiza-shi, Saitama-ken (JP); Matsuyama, Fumihiro, Kodaira-shi, Tokyo (JP)
(74) Representative: Görg, Klaus, Dipl.-Ing.

(56) References cited:
- EP-A- 0 004 715
- EP-A- 0 432 993
- EP-A- 0 639 447
- DE-B- 1 579 231
- FR-A- 913 104
- FR-A- 1 366 516
- US-A- 4 614 562
- US-A- 5 116 449
- US-A- 5 273 612

## Description

### BACKGROUND OF THE INVENTION

### Field of the Invention:

The present invention relates to a tire-forming drum, and more particularly to a tire-forming drum and a method of manufacturing a green tire which make it possible to efficiently form a tire excelling in uniformity.

### Description of the Related Art:

As methods of manufacturing a green tire, a single-stage method and a two-stage method are employed, and the formation of a carcass ply of an up-down structure has been possible only by the two-stage method, and has been impossible by the single-stage method.

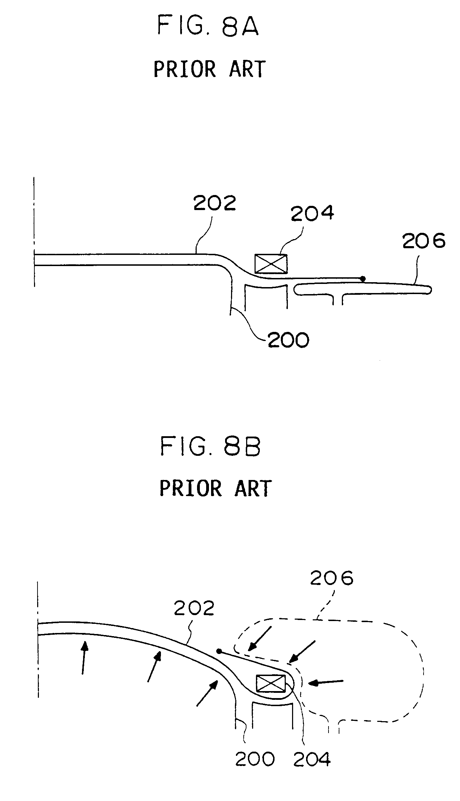

In the single-stage method, after a carcass ply 202 is attached to a center bladder 200 and a bead core 204 is set as shown in Fig. 8A, the center bladder 200 is inflated with air, and a side bladder 206 is also inflated so as to turn up a ply end portion inwardly in such a manner as to wrap the bead core 204, thereby obtaining a green case.

When an attempt is made to form a tire of the up-down structure by the single-stage method, it is necessary to attach a down-ply to an up-ply (corresponding to the carcass ply 202 in Figs. 8A and 8B) after the up-ply is attached. However, since the up-ply which is supported by the inflated center bladder is liable to be deformed by an external force (since the center bladder inflated with air is soft), it is difficult to maintain a proper shape and attach the down-ply in a fixed shape. For this reason, the formation of a tire adopting the up-down structure could not be coped with by the single-stage method which is considered to be desirable in ensuring the uniformity of the tire.

However, in the two-stage method, although it is possible to form a tire of the up-down structure, it is necessary to effect an operation in which after a hollow cylindrical carcass is formed by a carcass former, the carcass is removed from the carcass former and transferred onto a shaping former. Hence, there are cases where the carcass is undesirably deformed during the transfer and mounting thereof onto the shaping former, constituting a bottleneck in improvement of the uniformity of the tire.

In the single-stage method, although the transferring operation is not required unlike the two-stage method, and there is no risk of deformation of the green case, it is impossible to form a tire of the up-down structure, as described above. In the two-stage method, on the other hand, although it is possible to form a tire of the up-down structure, it is impossible to efficiently form a tire excelling in uniformity.

FR-R-1 366 516, EP-A0 432 993 and DE-B-1 579 231 reveal, respectively, a tire-forming drum comprising: a center drum divided into a plurality of segments in a circumferential direction and capable of expanding or contracting in a radial direction; a pair of side drums respectively provided in juxtaposition to both axial sides of said center drum and each divided into a plurality of segments in the circumferential direction, said pair of side drums being capable of expanding or contracting in the radial direction and capable of being inserted into a radially inner side of said center drum; supporting means disposed coaxially with axes of said center drum and said side drums so as to support said center drum; urging means for urging said plurality of segments of said center drum in a direction in which a diameter of said center drum is reduced in the radial direction; a pair of slide bases for respectively supporting said pair of side drums in such a manner that said side drums are movable along an axial direction of said supporting means; side-drum-diameter enlarging means provided for each of said slide bases so as to enlarge and reduce a diameter of each of said side drums in the radial direction by moving said segments of each of said side drums in the radial direction; slide-base moving means for moving said slide bases along the axial direction of said supporting means; a center bladder formed in a hollow cylindrical shape in such a manner as to cover outer peripheral surfaces of said center drum and said side drums and to be inflatable radially outwardly of said center drum from a state in which said center bladder is adhered to the outer peripheral surfaces of said center drum and said side drums, both axial sides of said center bladder being respectively supported by said slide bases; a pair of bead-core fixing means respectively disposed on said slide bases and located on respective axial sides of said center bladder, said pair of bead-core fixing means being capable of expanding or contracting for supporting a pair of bead cores thereon in a radially outward direction of said bead-core fixing means; and a pair of side bladders respectively provided for said pair of slide bases and capable of expanding or contracting in the radial direction for turning up those end portions of an up-ply that project axially outwardly of the respective bead cores, from an axially outer side toward an axially inner side of said bead-core fixing means, said up-ply being attached to an outer peripheral surface of said center bladder.

With the aforementioned tire-forming drum of FR-R-1 366 516, EP-A0 432 993 and DE-B-1 579 231 a single-stage method of manufacturing a green tire having an up-structure is carried out. In this single-stage method, a carcass ply serving as an up-ply is attached to the center bladder and the bead cores are positioned onto the carcass ply. Then the center bladder and/or the side bladders are inflated so as to turn up the up-ply end portions inwardly and wrap them around the bead cores, thereby obtaining the green carcass having an up-structure.

### SUMMARY OF THE INVENTION

In view of the above-described circumstances, it is an object of the present invention is to provide a tire-forming drum and a method of manufacturing a green tire which make it possible to efficiently form a tire of an up-down structure excelling in uniformity.

In accordance with a first aspect of the present invention, there is provided a tire-forming drum comprising the features of claim 1.

In accordance with a second aspect of the present invention, there is provided a method of manufacturing a green tire, comprising: the features of claim 14.

By using the tire-forming drum in accordance with the first aspect of the present invention, a tire of an up-down structure excelling in uniformity can be formed as follows:
(1) The side drums are positioned in advance in juxtaposition to the axially opposite sides of the center drum. The outside diameters of the side drums are made in advance to conform to the outside diameter of the center drum by reducing the diameters of the side drums. In addition, the outside diameter of each bead-core fixing means is reduced in advance by a predetermined dimension in such a way as to be smaller than the inside diameter of the bead core.
(2) The first carcass ply serving as an up-ply is attached to the center bladder. Positions of both ends of the first carcass ply are each set to be spaced apart a predetermined distance axially outwardly of the bead-core fixing means (i.e., on the side of the bead-core fixing means that is away from the center bladder).
(3) Each annular bead core is inserted in such a manner as to be placed over the outer periphery of the first carcass ply, so as to be positioned over the radially outer surface of the bead-core fixing means.
(4) The diameter of each bead-core fixing means is enlarged to fix each bead core together with the first carcass ply from inside.
(5) Each bead filler is attached to the fixed bead core at a predetermined position thereof.
(6) The two slide bases are moved toward the center drum by the slide-base moving means, thereby causing the first tapered portions of the segments constituting each side drum and the second tapered portions of the segments constituting the center drum to abut against each other. Subsequently, the side-drum-diameter enlarging means is operated to enlarge the diameter of each side drum by a small amount. Since the first tapered portions and the second tapered portions in contact with each other, the segments of the center drum are pressed by the segments of the side drums from inside in the radially outward direction, and are thereby moved in the radially outward direction. Consequently, both the diameters of the side drums and the center drum are enlarged.
(7) The side bladders are inflated to turn up the axial end portions of the first carcass ply about the respective bead cores toward the axially inner side of the bead-core fixing means.
(8) Each turn-up portion of the first carcass ply is pressed against and adhered to the main-body portion of the first carcass ply, the bead core, and the bead filler by using known stitching rollers or the like. At this juncture, since the side drums are disposed on the radially inner side of the first carcass ply, the turn-up portion can be reliably adhered to the main-body portion of the first carcass ply, the bead core, and the bead filler by being pressed by the stitching rollers.
(9) The second carcass ply serving as a down-ply is attached to the first carcass ply serving as the up-ply.
(10) The overall second carcass ply is pressed against and adhered to the first carcass ply by using known stitching rollers or the like. At this juncture, since the center drum and the side drums are disposed on the radially inner side of the second carcass ply serving as the down-ply, the second carcass ply can be reliably adhered to the first carcass ply by being pressed by the stitching rollers.
(11) Each side tread is attached to the second carcass ply at a predetermined position thereof.
(12) Each side tread is pressed against and adhered to the second carcass ply by using known stitching rollers or the like. Since the center drum and the side drums are disposed on the radially inner side of the second carcass ply as described above, the side tread can be reliably adhered to the second carcass ply by being pressed by the stitching rollers.
(13) The center bladder is inflated by a predetermined amount to inflate the first and second carcass plies. At the same time, the slide bases are moved further in the axially inward direction (i.e., toward the center drum) by means of the slide-base moving means. At this juncture, the first tapered portions of the segments constituting each side drum and the second tapered portions of the segments constituting the center drum are slid with respect to each other. Consequently, the segments of the center drum are pressed and moved by the segments of the side drums from inside in the radially outward direction, and the side drums enter the radially inner side of the center drum. Hence, the bead cores are made to approach each other, thereby reducing the width between the bead cores.
(14) Finally, additional component parts of the tire such as a belt and a top tread are attached at a predetermined position on the inflated carcass, thereby completing a green tire.

By using the tire-forming drum of the present invention, the formation of a green tire of the up-down structure can be effected up to the completion thereof by a single tire-forming drum, and a green tire excelling in uniformity can be manufactured by the single-stage method.

In addition, in accordance with the method of manufacturing a green tire in the second aspect of the invention, in the first step, the side drums are positioned in juxtaposition to the axial sides of the center drum, and the outside diameters of the center drum and the side drums are set to a substantially identical outside diameter. Then, the first carcass ply serving as the up-ply is attached to an outer periphery of the center bladder kept in close contact with outer peripheral surfaces of the center drum and the side drums, such that each axial end of the first carcass ply is located at a position spaced apart a predetermined distance axially outwardly of the bead-core fixing means.

In the second step, each of the annular bead cores is placed over the radially outer surface of each of the bead-core fixing means via the first carcass ply attached to the center bladder. Then, the diameter of each of the bead-core fixing means is enlarged so as to fix each of the bead cores together with the first carcass ply from the inner side thereof in the radially outward direction.

In the third step, a bead filler is attached to each fixed bead core at a predetermined position thereof.

In the fourth step the pair of bead core fixing means is moved inwardly in said axial direction such that the distance between the pair of bead cores is shortened to a first predetermined distance;

In the fifth step, the diameters of the side drums and the center drum are enlarged until the outer peripheral surfaces of the side drums and the center drum abut against an inner peripheral surface of the first carcass ply.

In the sixth step, each axial end portion of the first carcass ply is turned up in an axially inward direction of the bead-core fixing means about the bead core with the bead filler attached thereto by inflating each of the side bladders, so as to cause each turn-up portion of the first carcass ply to be pressed against and adhered to a main-body portion of the first carcass ply, the bead core, and the bead filler. Hence, the positions of the bead cores are prevented from becoming offset during the turning-up operation in the fifth step. In addition, since the side drums are disposed on the radially inner side of the first carcass ply, the turn-up portion can be reliably adhered to the main-body portion of the first carcass ply, the bead core, and the bead filler by being pressed by known stitching rollers or the like.

In the seventh step, the second carcass ply serving as the down-ply is attached to the first carcass ply whose axial end portions are turned up, so as to cause the entire second carcass ply to be pressed against and adhered to the first carcass ply whose end portions are turned up. Since the center drum and the side drums are disposed on the radially inner side of the second carcass ply, the second carcass ply can be reliably adhered to the first carcass ply by being pressed by known stitching rollers or the like.

In the eighth step, each side tread is attached at a predetermined position on an outer peripheral surface of the second carcass ply adhered to the first carcass ply.

In the nineth step, the center bladder is inflated so as to inflate the first carcass ply and the second carcass ply which are superposed on the center bladder. At the same time, the side drums and the pair of bead core fixing means are moved in respectively axially inward directions such that the distance between the pair of bead cores is shortened to a second predetermined distance, said second predetermined distance being shorter than the first predetermined distance, and at least one of the center drum and the side drums is expanded or contracted, and the side drums are inserted into the radially inner side of the center drum, so as to allow the bead cores to approach each other.

In the tenth step, a belt and a top tread are attached at a predetermined position on the inflated second carcass ply superposed on the inflated first carcass ply. A green tire is manufactured through the above-described steps.

Thus, in accordance with the method of the present invention for manufacturing a green tire, the formation of a green tire can be effected by a single tire-forming drum up to the completion thereof. Since the first carcass ply serving as the up-ply and the second carcass ply serving as the down-ply can be reliably adhered to each other, and the positions of the bead cores are prevented from becoming offset, green tires excelling in uniformity can be manufactured efficiently.

The above and other objects, features and advantages of the present invention will become more apparent from the following detailed description of the invention when read in conjunction with the accompanying drawings.

### BRIEF DESCRIPTION OF THE DRAWINGS

Fig. 1 is a cross-sectional view taken along the axis of a tire-forming drum in accordance with an embodiment of the present invention;
Fig. 2 is a cross-sectional view taken along the axis of the tire-forming drum and illustrates a state in which a carcass ply for up-ply use is attached, and a bead core is fixed;
Fig. 3 is a cross-sectional view taken along the axis of the tire-forming drum and illustrates a state in which a carcass ply for down-ply use and side treads are attached to the carcass ply for up-ply use after an end portion is turned up;
Fig. 4 is a cross-sectional view taken along the axis of the tire-forming drum and illustrates a state in which the carcass is inflated;
Fig. 5 is a cross-sectional view of the tire-forming drum taken along the line 5 - 5 of Fig. 1;
Fig. 6 is a cross-sectional view of the tire-forming drum taken along the line 6 - 6 of Fig. 1;
Fig. 7 is a radial cross-sectional view of a center drum in a state in which the diameter is enlarged;
Fig. 8A is a cross-sectional view taken along the axis of a tire-forming drum used in a conventional single-stage method; and
Fig. 8B is a cross-sectional view taken along the axis of the tire-forming drum shown in Fig. 8A, and illustrates a state in which the carcass mounted on the tire-forming drum is inflated, and an end portion is turned up.

### DESCRIPTION OF THE PREFERRED EMBODIMENT

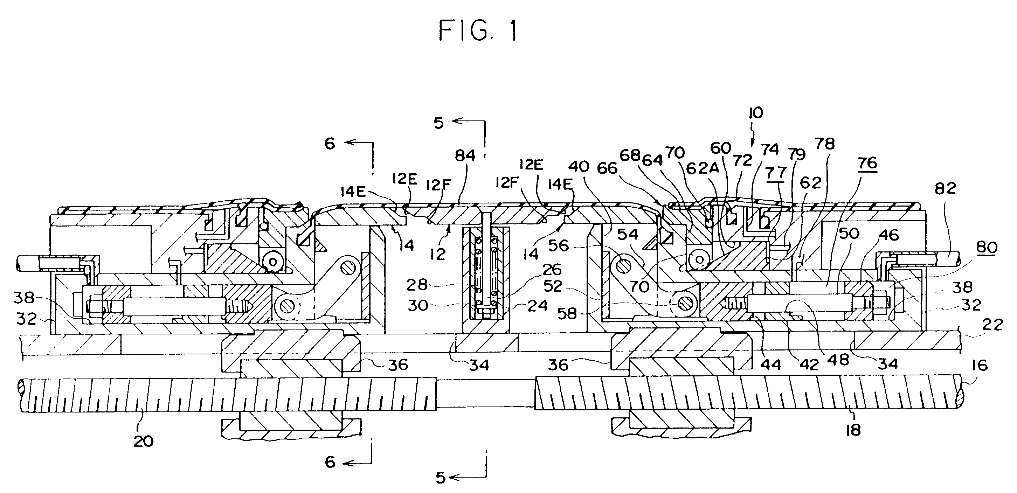

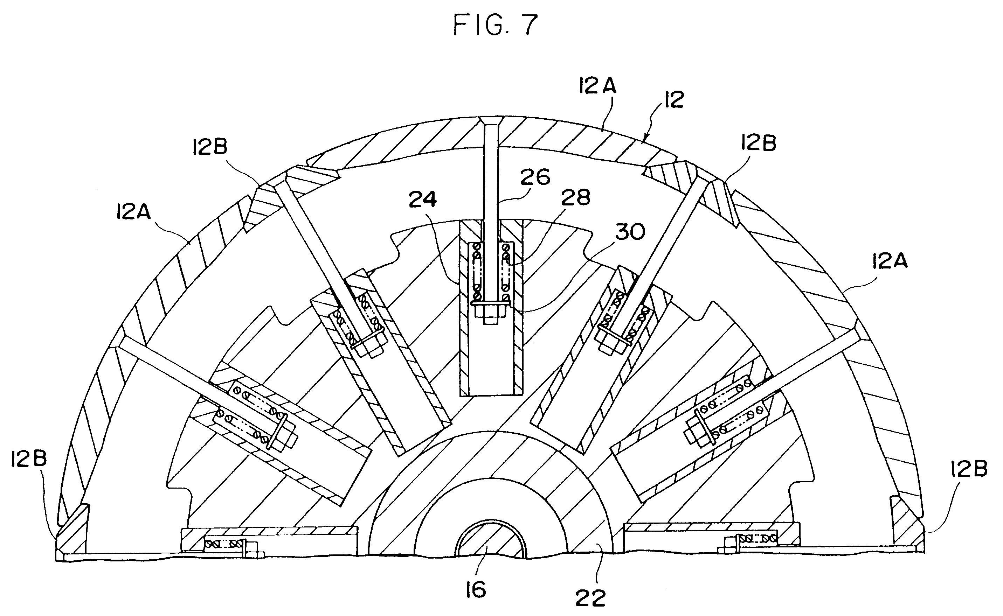

Referring now to Figs. 1 to 7, a description will be given of an embodiment of a tire-forming drum in accordance with the present invention.

As shown in Fig. 1, a tire-forming drum 10 is comprised of a center drum 12 and a pair of side drums 14 disposed on axially opposite sides of the center drum 12, respectively. It should be noted that, in the description of this embodiment, since the pair of side drums 14 are provided symmetrically with respect to the center drum 12, a description will be given of only one side drum 14.

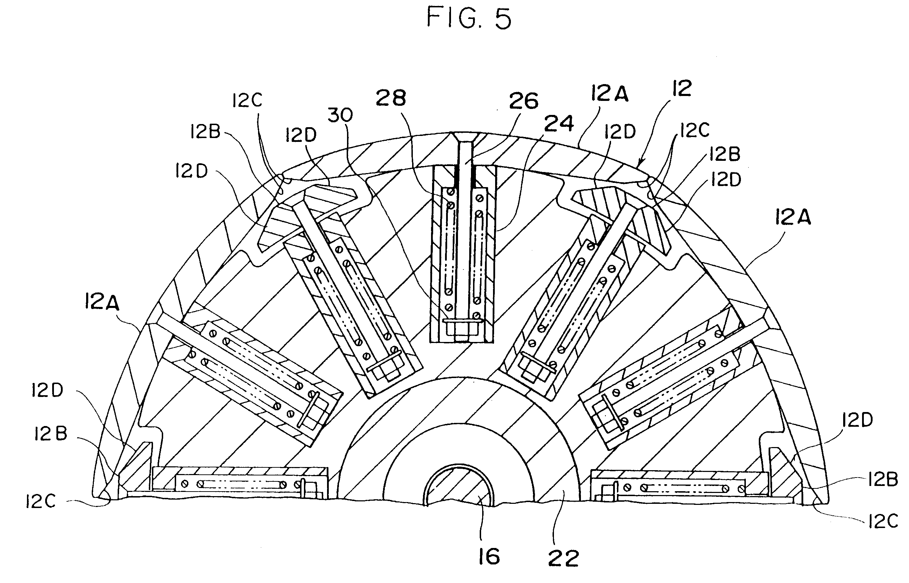

As shown in Fig. 5, the center drum 12 is divided into a plurality of segments in the circumferential direction. Specifically, large segments 12A, each having a radial cross section of a substantially arcuate shape and a larger circumferential dimension, and small segments 12B, each having a smaller circumferential dimension, are formed by being arranged alternately.

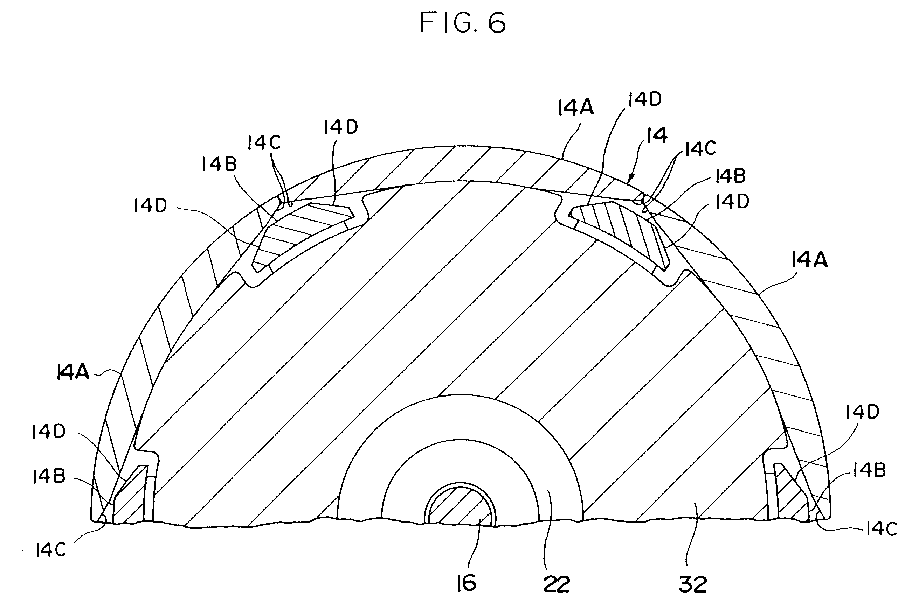

In addition, as shown in Fig. 6, the side drum 14 is also divided into a plurality of segments in the same way as the center drum 12, and large segments 14A and small segments 14B each having a radial cross section of a substantially arcuate shape are formed by being arranged alternately.

As shown in Figs. 5 and 6, each small segment 12B of the center drum 12 and each small segment 14B of the side drum 14 are provided with tapered surfaces 12D, 14D formed at circumferential end portions thereof on the outer peripheral side. Meanwhile, each large segment 12A of the center drum 12 and each large segment 14A of the side drum 14 are provided with tapered surfaces 12C, 14C formed at circumferential end portions thereof on the inner peripheral side.

As shown in Fig. 1, a drive shaft 16, which constitutes a part of a slide-base moving means that is rotated by an unillustrated motor, is passed through axial portions of the center drum 12 and the side drum 14. A right-handed thread 18 and a left-handed thread 20 are respectively formed on opposite sides of the drive shaft 16 with a longitudinally central portion placed therebetween.

A pipe 22 serving as a supporting means is disposed coaxially with the drive shaft 16 on the radially outer side thereof. This pipe 22 is supported by columns provided uprightly on an unillustrated floor.

As shown in Figs. 1 and 5, a plurality of hollow cylinders 24 are provided radially around an outer periphery of the pipe 22 at a longitudinally central portion of the pipe 22. The diameter of the bore at a distal end of the hollow cylinder 24 is reduced, and a slide shaft 26 is slidably inserted into the hollow cylinder 24. A coil spring 28 serving as an urging means is disposed in the hollow cylinder 24, and the coil spring 28 abuts against a washer 30 secured to a radially inner end of the slide shaft 26, so as to urge the slide shaft 26 toward the drive shaft 16. The center segments 12A and 12B are each affixed to a distal end of the slide shaft 26 projecting from the hollow cylinder 24. It should be noted that the urging means is not limited to the coil spring 28, and any urging means may be used insofar as it is capable of urging the slide shaft 26 toward the drive shaft 16.

As shown in Fig. 1, a pair of cylindrical slide bases 32 for supporting the respective side drums 14 are provided on the outer periphery of the pipe 22 on axially opposite sides of the center drum 12. The slide bases 32 are movable along the axial direction of the pipe 22. A pair of elongated holes 34 are formed in the pipe 22 in such a manner as to extend in the longitudinal direction of the pipe 22. A portion of each of two internally threaded members 36, which respectively mesh with the right-handed thread 18 and the left-handed thread 20 of the drive shaft 16 and constitute the other parts of the slide-base moving means, is passed through the elongated hole 34 and is coupled to the slide base 32. Accordingly, as the drive shaft 16 rotates, the slide bases 32 are capable of moving toward and away from each other.

The slide base 32 is provided with a first cylinder hole 38 on the drive shaft 16 side. The first cylinder hole 38 is provided around the drive shaft 16 coaxially therewith, and has a radial cross section which is annular in shape.

A plurality of rectangular holes 40 extending in the radial direction of the drive shaft 16 are provided circumferentially at predetermined pitches on that side of the first cylinder hole 38 that is located on the center drum 12 side. These rectangular holes 40 communicate with the first cylinder hole 38.

An annular partition wall 42 is provided in an axially intermediate portion of the first cylinder hole 38 so as to divide the first cylinder hole 38 axially into two parts. In the first cylinder hole 38, an annular first piston 44 is disposed on the center drum 12 side of the partition wall 42, while an annular second piston 46 is disposed on the opposite side thereof. The first piston 44 and the second piston 46 are connected to each other by means of connecting shafts 50 inserted in through holes provided in the partition wall 42. It should be noted that O-rings (not shown) for maintaining airtightness are provided in axially intermediate portions of the through holes 48 in the partition wall 42 and on respective inner and outer peripheries of the first piston 44 and the second piston 46.

Slide blocks 52 are disposed in the rectangular holes 40, respectively. The slide blocks 52 are movable in the rectangular holes 40 along the radial direction of the drive shaft 16. Each of the slide blocks 52 is formed as a hollow, box-shaped body, and one side of a link 54 is inserted into a hollow portion thereof.

One end of the link 54 is swingably supported by a shaft 56 attached to a substantially central portion of the slide block 52, and the other end of the link 54 is swingably supported by a shaft 58 attached to an end of the first piston 44. For this reason, when the first piston 44 moves toward the center drum 12, the slide block 52 moves radially outwardly in the rectangular hole 40. When the first piston 44 moves away from the center drum 12, the slide block 52 moves radially inwardly in the rectangular hole 40.

The large segment 14A or the small segment 14B of the side drum 14 is attached to a radially outer end of each slide block 52.

It should be noted the first piston 44, the connecting shafts 50, the second piston 46, the links 54, the slide blocks 52, and the like constitute a side-drum-diameter enlarging means.

The slide base 32 is provided with a second cylinder hole 60 on the radially outer side of the first cylinder hole 38. In the same way as the first cylinder hole 38, this second cylinder hole 60 is provided around the drive shaft 16 coaxially therewith, and has a radial cross section which is annular in shape.

An annular piston 62 constituting a part of the bead-core fixing means is disposed in the second cylinder hole 60. This piston 62 is movable in the second cylinder hole 60 along the axial direction, and O-rings (not shown) for maintaining airtightness are provided on an axially intermediate portion of the piston 62 on inner and outer peripheries thereof. The piston 62 has a tapered surface 62A formed on its outer periphery on the center drum side.

In addition, a plurality of rectangular holes 64 extending in the radial direction of the drive shaft 16 are provided circumferentially at predetermined pitches on that side of the second cylinder hole 60 that is located on the center drum 12 side. These rectangular holes 64 communicate with the second cylinder hole 60.

A small slide block 66 constituting another part of the bead-core fixing means is disposed in each rectangular hole 64. The small slide block 66 is movable in the rectangular hole 64 along the radial direction of the drive shaft 16. A bead-placing portion 68 is formed on each small slide block 66 on the radially outer side thereof. The bead-placing portion 68 has an axial cross section of a substantially concave shape.

The respective small slide blocks 66 are connected to each other by means of an annular resilient band, and are thereby urged toward the drive shaft 16.

A friction-reducing roller 70, which is adapted to roll by abutting against the tapered surface 62A of the piston 62, is provided on the drive shaft side of the small slide block 66.

A side bladder 72 is disposed on the outer peripheral side of the slide base 32. The configuration of the side bladder 72, when inflated with air, is shaped substantially like a doughnut, and is installed with its axially opposite ends fitted into grooves provided in outer peripheral portions of the slide base 32.

As shown in Fig. 1, the side bladder 72, when not inflated with air, has its radially inner surface kept in close contact with the outer peripheral surface of the slide base 32, and its center drum-side end portion is mounted on the bead-placing portions 68.

The slide base 32 is provided with the following pipelines: a pipeline 74 for inflating the interior of the side bladder 72 with air; a pipeline 78 for allowing air to move into or out of an air chamber 76 located between the second piston 46 and the partition wall 42; a pipeline 79 for allowing air to move into or out of an air chamber 77 located between the bottom of the second cylinder hole 60 and the piston 62; and a pipeline 82 for allowing air to move into or out of a second air chamber 80 located between the second piston 46 and the first cylinder hole 38. These pipelines are respectively connected to unillustrated compressors and the like.

A center bladder 84 is disposed on radially outer surfaces of the center drum 12 and the side drum 14. Each end of the center bladder 84 is attached by being fitted in a groove provided in an axially outer wall surface of the square hole 40 in the slide base 32. The center bladder 84 is adapted to be inflated with air which is supplied by an air-supplying means. The center bladder 84, when not inflated, is kept in close contact with the outer peripheral surfaces of the center drum 12 and the side drum 14, as shown in Fig. 1.

Here, in a state in which the slide bases 32 are spaced apart from each other, and the piston 62 and the first piston 44 (and the second piston 46) are spaced away most from the center drum 12, the diameters of the center drum 12 and the side drum 14 are reduced most and assume the same outside diameter (see Figs. 5 and 6). At the same time, this outside diameter becomes substantially the same as that of the slide base 32.

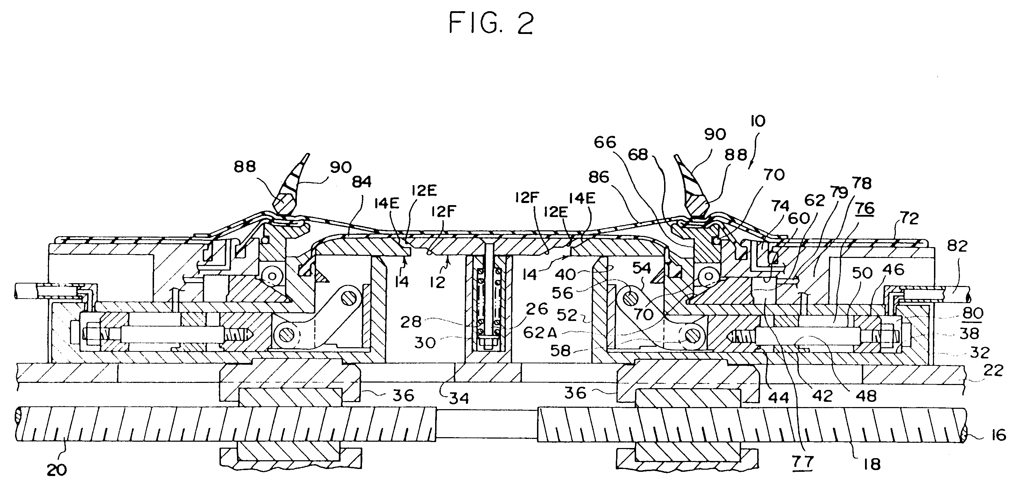

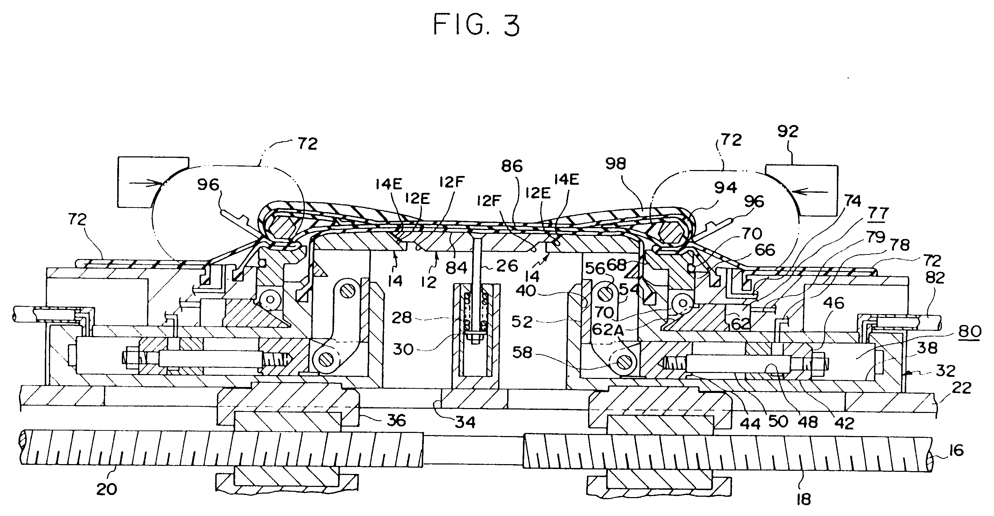

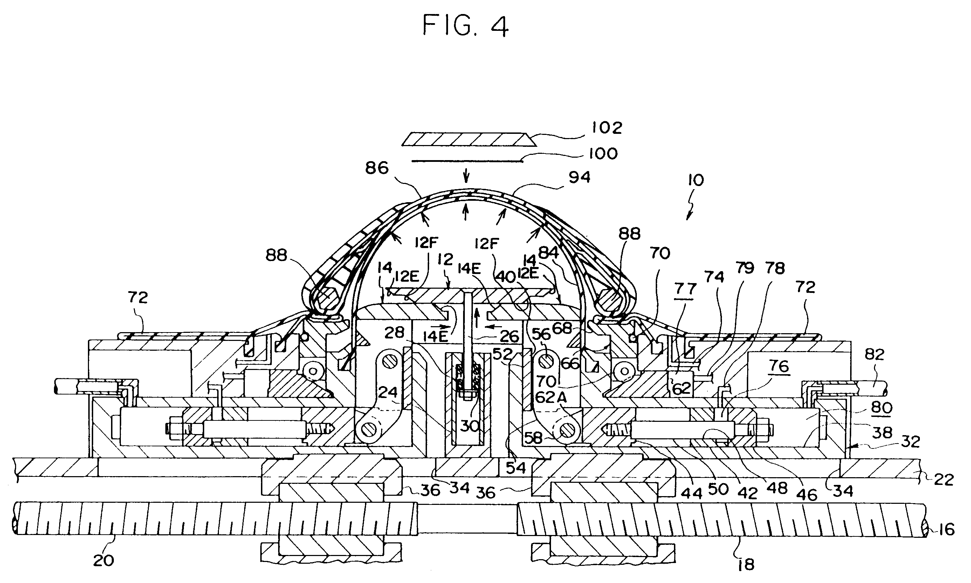

Next, a description will be given of the procedure of forming a green tire of the up-down structure by using the tire-forming drum 10 of this embodiment in accordance with the following steps (1) to (6):
(1) In the tire-forming drum 10 in an initial state shown in Fig. 1, a carcass ply 86 for up-ply use is mounted on the outer peripheries of the center bladder 84 and the side bladders 72, as shown in Fig. 2. It should be noted that the carcass ply 86 for up-ply use has such a width that each of its ends is located at a position spaced apart a predetermined dimension axially outwardly of the bead-placing portion 68.
(2) After each annular bead core 88 is placed on that portion of the outer periphery of the carcass ply 86 for up-ply use that is located on the radially outer surface of the bead-placing portion 68, compressed air is filled in the air chamber 77 through the pipeline 79 to move the piston 62 in the axially inward direction (i.e., toward the center drum). Consequently, each roller 70 provided on the small slide block 66 rolls on the tapered surface 62A of the piston 62, thereby causing the slide block 66 to move radially outwardly, as shown in Fig. 2. As a result, each bead-placing portion 68 presses the bead core 88 from inside in the radial direction of the drive shaft 16 with the side bladder 72 and the carcass ply 86 for up-ply use placed therebetween, thereby fixing the bead core 88 at a predetermined position. Subsequently, each annular bead filler 90 having a substantially triangular cross section is attached to the fixed bead core 88 at a predetermined position thereof.
(3) After the drive shaft 16 in the state shown in Fig. 2 is rotated as shown in Fig. 3, and the side drums 14 are thereby moved in axially inward directions (i.e., in mutually approaching directions) until they are made to abut against the center drum 12, compressed air is filled in the second air chamber 80. Both the second piston 46 and the first piston 44 connected thereto move in the axially inward direction, so that each slide block 52 connected to the first piston 44 by means of the link 54 moves in the radially outward direction. Hence, the diameter of each side drum 14 is enlarged until the outer peripheral surface of the center bladder 84 abuts against the inner peripheral surface of the carcass ply 86 for up-ply use, while the diameter of the center drum 12 abutting against the side drums 14 is also enlarged (see Fig. 3). Here, each side bladder 72 is inflated (as indicated by a phantom line in Fig. 3), and the inflated side bladder 72 is pressed in the axially inward direction by a push can 92 from the axially outer side, thereby causing an end portion of the carcass ply 86 for up-ply use to be turned up about the bead core 88. The turn-up portion is pressed by stitching rollers 96 substantially from the axially outward side so as to adhere to a main-body portion or the carcass ply 86 for up-ply use, the bead core 88, and the bead filler 90. Since the diameter of the bead-core fixing means constituted by the bead-placing portions 68 is enlarged along the radially outward direction of the drive shaft 16, and the bead cores 88 are thus fixed by the bead-placing portions 68, the positions of the bead cores 88 are not offset during the turning-up operation. In addition, since the side drums 14, whose diameters are enlarged until the outer peripheral surface of the center bladder 84 abuts against the inner peripheral surface of the carcass ply 86 for up-ply use, are disposed on the radially inner side of the carcass ply 86 for up-ply use, each turn-up portion can be reliably adhered to the main-body portion of the carcass ply 86 for up-ply use, the bead core 88, and the bead filler 90 by being pressed by the stitching rollers 96.
(4) A carcass ply 94 for down-ply use is attached at a predetermined position on the outer periphery of the carcass ply 86 for up-ply use with both ends turned up, and the carcass ply 94 for down-ply use is pressed from above by the stitching rollers 96 so as to be adhered to the carcass ply 86 for up-ply use. Since the center drum 12 and the side drums 14, the diameters of which are enlarged until the outer peripheral surface of the center bladder 84 abuts against the inner peripheral surface of the carcass ply 86 for up-ply use, are disposed on the radially inner side of the carcass ply 94 for down-ply use, the carcass ply 94 for down-ply use can be reliably adhered to the carcass ply 86 for up-ply use by being pressed by the stitching rollers 96.
(5) A side tread 98 is attached to the radially outer surface of the carcass ply 94 for down-ply use at a predetermined position thereof, and the side tread 98 is pressed from above by the stitching rollers 96 so as to be adhered to the carcass ply 94 for down-ply use. In this case as well, since the center drum 12 and the side drums 14, the diameters of which are enlarged until the outer peripheral surface of the center bladder 84 abuts against the inner peripheral surface of the carcass ply 86 for up-ply use, are disposed on the radially inner side of the side tread 98, the side tread 98 can be reliably adhered to the carcass ply 94 for down-ply use by being pressed by the stitching rollers 96.
(6) As shown in Fig. 4, compressed air is supplied to the radially inner side of the center bladder 84 via unillustrated pipelines to inflate the center bladder 84. At the same time, the drive shaft 16 is rotated to move each slide base 32 further axially inwardly. At this juncture, the tapered surfaces 14E of each side drum 14 slide on the tapered surfaces 12E, 12F of the center drum 12. As a result, the side drums 14 push the center drum 12 radially outwardly and enters to the inner side of the center drum 12, causing the bead cores 88 to be moved axially inwardly. Consequently, the carcass ply 94 for down-ply use and the carcass ply 86 for up-ply use undergo enlargement of their diameters, and their configuration becomes close to that of the carcass of the product tire. Finally, additional component parts of the tire such as a belt 100 and a top tread 102 are attached at a predetermined position on the green case obtained as described above, thereby completing a green tire.

In the tire-forming drum 10 in this embodiment, since the center drum 12 and the side drums 14, which are rigid members, are disposed on the reverse side of the carcass ply 86 for up-ply use, the carcass ply 94 for down-ply use can be reliably adhered to the carcass ply 86 for up-ply use by means of the stitching rollers 96.

In addition, unlike the two-stage method, the formation of a green tire can be effected by a single tire-forming drum up to the completion of the tire by using the tire-forming drum 10 of this embodiment. Since the bead cores 88 are fixed and are prevented from moving undesirably, it is possible to efficiently manufacture green tires having excellent uniformity.

Reference signs in the claims are intended for better understanding and shall not limit the scope.

## Claims

1. A tire-forming drum (10) comprising:
a center drum (12) divided into a plurality of segments (12A, 12B) in a circumferential direction and capable of expanding or contracting in a radial direction;
a pair of side drums (14) respectively provided in juxtaposition to both axial sides of said center drum (12) and each divided into a plurality of segments (14A, 14B) in the circumferential direction, said pair of side drums (14) being capable of expanding or contracting in the radial direction and capable of being inserted into a radially inner side of said center drum (12);
supporting means (22, 30) disposed coaxially with axes of said center drum (12) and said side drums (14) so as to support said center drum (12);
urging means (28) or urging said plurality of segments of said center drum (12) in a direction in which a diameter of said center drum (12) is reduced in the radial direction;
a pair of slide bases (32) for respectively supporting said pair of side drums (14) in such a manner that said side drums (14) are movable along an axial direction of said supporting means (22);
side-drum-diameter enlarging means (44, 46, 50, 52, 54) provided for each of said slide bases (32) so as to enlarge and reduce a diameter of each of said side drums (14) in the radial direction by moving said segments of each of said side drums (14) in the radial direction;
slide-base moving means (16, 18, 20, 36) for moving said slide bases (32) along the axial direction of said supporting means (22, 30);
first tapered portions (14E) respectively provided at those ends of said plurality of segments constituting said side drum (14) that oppose said center drum (12);
second tapered portions (12E, 12F) respectively provided at those ends of said plurality of segments constituting said center drum (12) that oppose each of said side drums (14), said second tapered portions (12E, 12F) corresponding to said first tapered portions (14E);
a center bladder (84) formed in a hollow cylindrical shape in such a manner as to cover outer peripheral surfaces of said center drum (12) and said side drums (14) and to be inflatable radially outwardly of said center drum (12) from a state in which said center bladder (84) is adhered to the outer peripheral surfaces of said center drum (12) and said side drums (14), both axial sides of said center bladder being respectively supported by said slide bases (32);
a pair of bead-core fixing means (62, 66, 70) respectively disposed on said slide bases (32) and located on respective axial sides of said center bladder (84) in such a manner as to be movable in the axial direction, said pair of bead-core fixing means (62, 66, 70) being capable of expanding or contracting for supporting a pair of bead cores (88) thereon in a radially outward direction of said bead-core fixing means (62, 66, 70), and further being adapted to be movable inwardly in said axial direction to a first predetermined position such that the distance between the pair of bead cores (88) is shortened to a first predetermined distance and further movable inwardly in said axial direction to a second predetermined position such that the distance between the pair of bead cores (88) is shortened to a second predetermined distance, said second predetermined distance being shorter than the first predetermined distance, and
a pair of side bladders (72) respectively provided for said pair of slide bases (32) and capable of expanding or contracting in the radial direction for turning up those end portions of a ply (86) that project axially outwardly of the respective bead cores (88), from an axially outer side toward an axially inner side of said bead-core fixing means (62, 66, 70), said ply (86) being attached to an outer peripheral surface of said center bladder (84).

2. A tire-forming drum according to Claim 1, wherein said supporting means (22, 30) has an elongated hollow cylindrical member (22) for supporting said center drum (12) at a predetermined axial position of said center drum (12).

3. A tire-forming drum according to Claim 2, wherein said supporting means (22, 30) has supporting members (30) disposed on an outer peripheral surface of said hollow cylindrical member (22) so as to support said center drum (12) in such a manner as to allow said center drum (12) to be movable only in the radial direction.

4. A tire-forming drum according to Claim 1, wherein said urging means (28) is disposed in said supporting means (22, 30).

5. A tire-forming drum according to Claim 4, wherein said urging means (28) is constituted by coil springs.

6. A tire-forming drum according to Claim 1, wherein said slide-base moving means (16, 18, 20, 36) has a drive shaft (16) for transmitting a rotatively driving force from an external driving source to said slide bases (32).

7. A tire-forming drum according to Claim 6, wherein said drive shaft (16) has a right-handed thread (18) and a left-handed thread (20) which are juxtaposed in a longitudinal direction of said drive shaft (16).

8. A tire-forming drum according to Claim 7, wherein said slide-base moving means (16, 18, 20, 36) has a pair of internally threaded members (36) coupled respectively to said slide bases (32), one of said pair of internally threaded members (36) meshing with the right-handed thread (18), another one of said pair of internally threaded members meshing with the left-handed thread (20).

9. A tire-forming drum according to Claim 6, wherein said drive shaft (16) is disposed in such a manner as to be inserted into an elongated hollow cylindrical member (22) provided in said supporting means (22, 30).

10. A tire-forming drum according to Claim 1, wherein each of said bead-core fixing means (62, 66, 70) has a plurality of first slide blocks (66) provided at predetermined intervals along a circumferential direction of said center bladder (84), each of said plurality of first slide blocks (66) being provided in such a manner as to be movable only along a radial direction of said center bladder (84) and having a roller (70) supported rotatably in a vicinity of a radially inner end of each of said plurality of first slide blocks (66).

11. A tire-forming drum according to Claim 10, wherein each of said bead-core fixing means (62, 66, 70) includes a first piston (62) having a tapered surface (62A) capable of abutting against said rollers (70), said rollers (70) being adapted to move on the tapered surface (62A) as said first piston (62) moves.

12. A tire-forming drum according to Claim 1, wherein said side-drum-diameter enlarging means (44, 46, 50, 52, 54) includes a plurality of second slide blocks (52) provided in correspondence with respective ones of said plurality of segments (14A, 14B) of said side drum (14), said plurality of second slide blocks (52) being provided movably only in a radial direction of said side drum (14).

13. A tire-forming drum according to Claim 12, wherein said side-drum-diameter enlarging means (44, 46, 50, 52, 54) includes a second piston (44) for moving said plurality of second slide blocks (52) in the radial direction of said side drum as said second piston (44) moves in a direction parallel with an axial direction of said side drum (14).

14. A method of manufacturing a green tire, comprising:
providing a tire-forming drum (10) including: a center drum (12) divided into a plurality of segments (12A, 12B) in a circumferential direction and capable of expanding or contracting in a radial direction; a pair of side drums (14) respectively provided in juxtaposition to both axial sides of said center drum (12) and each divided into a plurality of segments (14A, 14B) in he circumferential direction, said pair of side drums (14) being capable of expanding or contracting in the radial direction and capable of being inserted into a radially inner side of said center drum (12); a center bladder (84) formed in a hollow cylindrical shape in such a manner as to cover outer peripheral surfaces of said center drum (12) and said side drums (14) and to be inflatable radially outwardly of said center drum (12) from a state in which said center bladder (84) is adhered to the outer peripheral surfaces of said center drum (12) and said side drums (14), both axial sides of said center bladder (84) being respectively supported by a pair of slide bases (32) for supporting said pair of side drums (14); a pair of bead-core fixing means (62, 66, 70) respectively disposed on said slide bases (32) and located on respective axial sides of said center bladder (84) in such a manner as to be movable in an axial direction, said pair of bead-core fixing means (62, 66, 70) being capable of expanding or contracting for supporting a pair of annular bead cores (88) thereon in a radially outward direction of said bead-core fixing means (62, 66, 70); and a pair of side bladders (72) capable of expanding or contracting in the radial direction for turning up those end portions of a ply (86) that project axially outwardly of the respective bead cores (88), from an axially outer side toward and axially inner side of said bead-core fixing means (62, 66, 70), said ply (86) being attached to an outer peripheral surface of said center bladder (84);
a first step of positioning said side drums (14) in juxtaposition to the respective axial sides of said center drum (12), setting outside diameters of said center drum (12) and said side drums (14) to a substantially identical outside diameter, and attaching a first carcass ply (86) serving as an up-ply to an outer periphery of said center bladder (84) kept in close contact with outer peripheral surfaces of said center drum (12) and said side drums (14), such that each axial end of the first carcass ply (86) is located at a position spaced a predetermined distance apart axially outwardly of said bead-core fixing means (62, 66, 70);
a second step of placing each of the bead cores (88) over a radially outer surface of each of said bead-core fixing means (62, 66, 70) via the first carcass ply (86) attached to said center bladder (84), and enlarging a diameter of each of said bead-core fixing means (62, 66, 70) as so to fix each of the bead cores (88) together with the first carcass ply (86) in the radially outward direction of said bead-core fixing means (62, 66, 70);
a third step of attaching each of a pair of bead fillers (90) to each of the fixed bead cores (88) at a predetermined position thereof;
a fourth step of moving said pair of bead core fixing means (62, 66, 70) inwardly in said axial direction such that the distance between the pair of bead cores (88) is shortened to a first predetermined distance;
a fifth step of enlarging the diameters of said side drums (14) and said center drum (12) until the outer peripheral surfaces of said side drums (14) and said center drum (12) abut against an inner peripheral surface of the first carcass ply (86);
a sixth step of turning up in an axially inward direction of said bead-core fixing means (62, 66, 70) each axial end portion of the first carcass ply (86) about the bead core (88) with the bead filler (90) attached thereto by inflating each of said side bladders (72), so as to cause each turn-up portion of the first carcass ply (86) to be pressed against and adhered to a main-body portion of the first carcass ply (86), the bead core (88), and the bead filler (90);
a seventh step of attaching a second carcass ply (94) serving as a down-ply to the first carcass ply (86) whose end portions are turned up, so as to cause the entire second carcass ply (94) to be pressed against and adhered to the first carcass ply (86) whose end portions are turned up;
an eighth step of attaching a pair of side treads (98) at predetermined positions on an outer peripheral surface of the second carcass ply (94) adhered to the first carcass ply (86);
a ninth step of inflating said center bladder (84) so as to inflate the first carcass ply (86) and the second carcass ply (94) which are superposed on said center bladder (84), moving said side drums (14) and said pair of bead core fixing means (62, 66, 70) in respectively axially inward directions such that the distance between the pair of bead cores (88) is shortened to a second predetermined distance, said second predetermined distance being shorter than the first predetermined distance, and expanding or contracting at least one of said center drum (12) and said side drums (14), and inserting said side drums (14) to the radially inner side of said center drum (12), so as to allow the bead cores (88) to approach each other; and
a tenth step of attaching a belt (100) and a top tread (102) at a predetermined position on the inflated second carcass ply (94) superposed on the inflated first carcass ply (86).

15. A method of manufacturing a green tire according to Claim 14, wherein, in the second step, the diameter of each of said bead-core fixing means (62, 66, 70) is enlarged such that a radially outer surface of each of said bead-core fixing means (62, 66, 70) is located radially outwardly of radially outer surfaces of said center drum (12) and said side drums (14).

16. A method of manufacturing a green tire according to Claim 15, wherein each of said bead-core fixing means (62, 66, 70) has a plurality of first slide blocks (66) provided at predetermined intervals along a circumferential direction of said center bladder (84), each of said plurality of first slide blocks (66) being provided in such a manner as to be movable only along a radial direction of said center bladder (84) and having a roller (70) supported rotatably in a vicinity of a radially inner end of each of said plurality of first slide blocks (66), and wherein, in the second step, distal ends of said plurality of first slide blocks (66) fix each of the bead cores (88) as said plurality of first slide blocks (66) move in the radially outward direction.

17. A method of manufacturing a green tire according to Claim 16, wherein each of said bead-core fixing means (62, 66, 70) includes a first piston (62) having a tapered surface (62A) capable of abutting against said rollers (70), and wherein, in the second step, said plurality of first slide blocks (66) move in the radially outward direction as each of said rollers (70) moves on the tapered surface (62A) in conjunction with the movement of said first piston (62).

18. A method of manufacturing a green tire according to Claim 14, wherein the enlargement of the diameters of said side drums (14) and said center drum (12) in the fifth step is effected by causing axially opposing ends of said side drums (14) to abut against corresponding axial ends of said center drum (12) and by moving said side drums (14) in the radially outward direction.

19. A method of manufacturing a green tire according to Claim 18, wherein, in the fifth step, the diameters of said side drums (14) and said center drum (12) are enlarged such that radially outer surfaces of said center drum (12) and said side drums (14) are located radially outwardly of a radially outer surface of each of said bead-core fixing means (62, 66, 70).

20. A method of manufacturing a green tire according to Claim 18, wherein said side drums (14) and said center drum (12) have tapered surfaces (12E, 12F, 14E), respectively, and the tapered surfaces (14E) of said side drums (14) and the tapered surfaces (12E, 12F) of said center drum (12) are provided in such a manner as to be capable of abutting against each other and to be slidable with respect to each other, and wherein the approaching of the bead cores (88) toward each other in the ninth step is effected as the tapered surfaces (14E) of said side drums (14) and the tapered surfaces (12E, 12F) of said center drum (12) are made to abut against each other and are slid with respect to each other such that said side drums (14) move in mutually approaching directions.

## Patentansprüche

1. Reifenformtrommel (10), umfassend:
eine zentrale Trommel (12), die in eine Vielzahl von Segmenten (12A, 12B) in eine Umfangsrichtung unterteilt ist und in der Lage ist, sich auszudehnen oder zusammenzuziehen in einer radialen Richtung;
ein Paar von Seitentrommeln (14), die jeweils neben beiden axialen Seiten der zentralen Trommel (12) vorgesehen sind und jeweils in eine Vielzahl von Segmenten (14A, 14B) in der Umfangsrichtung unterteilt sind, wobei das Paar von Seitentrommeln (14) in der Lage ist, sich in der radialen Richtung auszudehnen oder zusammenzuziehen, und in der Lage ist, in eine radiale innere Seite der zentralen Trommel (12) eingefügt zu werden;
Halteeinrichtungen (22, 30), die koaxial mit den Achsen der zentralen Trommel (12) und den Seitentrommeln (14) angebracht sind, so daß sie die zentrale Trommel (12) halten;
Wirkeinrichtungen (28) zum Drücken der Vielzahl von Segmenten der zentralen Trommel (12) in eine Richtung, in der ein Durchmesser der zentralen Trommel (12) in der radialen Richtung reduziert ist;
ein Paar von Gleitbasen (32), um jeweils das Paar von Seitentrommeln (14) auf solch eine Weise zu halten, daß die Seitentrommeln (14) bewegbar entlang einer axialen Richtung der Halteeinrichtung (22) sind;
Seitentrommeldurchmesser-Vergrößerungseinrichtungen (44, 46, 50, 52, 54), die für jede der Gleitbasen 32 vorgesehen sind, so daß sie einen Durchmesser jeder der Seitentrommeln (14) in der radialen Richtung durch die Bewegung der Segmente jeder der Seitentrommeln (14) in der radialen Richtung vergrößern und reduzierten;
Gleitbasenbewegungseinrichtungen (16, 18, 20, 36) zur Bewegung der Gleitbasen (32) entlang der axialen Richtung der Halteeinrichtung (22, 30);
erste kegelförmige Bereiche (14E), die jeweils an denjenigen Enden der Vielzahl von Segmenten vorgesehen sind, die die Seitentrommel (14) darstellen, die gegenüber der zentralen Trommel (12) sind;
zweite kegelförmige Bereiche (12E, 12F), die jeweils an denjenigen Enden der Vielzahl von Segmenten, die die zentrale Trommel (12) bilden, vorhanden sind, die jeder der Seitentrommeln (14) gegenüberliegen, wobei die zweiten kegelförmigen Bereiche (12E, 12F) den ersten kegelförmigen Bereichen (14E) entsprechen;
ein zentraler Heizbalg (84), der auf eine hohle, zylindrische Form auf solch eine Weise gebildet ist, daß er die äußeren Umfangsoberflächen der zentralen Trommel (12) und der Seitentrommeln (14) bedeckt, und aufblasbar radial nach außen von der zentralen Trommel (12) von einem Zustand ist, in dem der zentrale Heizbalg (84) an den äußeren Umfangsoberflächen der zentralen Trommel (12) und der Seitentrommeln (14) haftet, wobei beide axialen Seiten des zentralen Heizbalgs jeweils durch die Gleitbasen (32) gehalten werden;
ein Paar von Wulstkernfixiereinrichtungen (62, 66, 70), die jeweils an den Gleitbasen (32) angebracht sind und sich auf jeweiligen axialen Seiten des zentralen Heizbalgs (84) auf solch eine Weise befinden, daß sie in der axialen Richtung bewegbar sind, wobei das Paar von Wulstkernfixiereinrichtungen (62, 66, 70) in der Lage ist, sich auszudehnen oder zusammenzuziehen, um ein Paar von Wulstkernen (88) darauf in einer radialen Richtung nach außen der Wulstkernfixiereinrichtungen (62, 66, 70) zu halten, und die weiter geeignet sind, in der axialen Richtung in eine erste vorbestimmte Position nach innen bewegbar zu sein, so daß der Abstand zwischen dem Paar von Wulstkernen (88) auf einen ersten vorbestimmten Abstand verkürzt wird, und die weiter nach innen bewegbar in der axialen Richtung in eine zweite vorbestimmte Position sind, so daß der Abstand zwischen dem Paar von Wulstkernen (88) auf einen zweiten vorbestimmten Abstand verkürzt wird, wobei der zweite vorbestimmte Abstand kürzer ist als der erste vorbestimmte Abstand, und
ein Paar von Seitenheizbälgen (72), die jeweils für das Paar von Gleitbasen (32) vorgesehen sind, und in der Lage sind, sich auszudehnen oder zusammenzuziehen in der radialen Richtung, um diejenigen Endbereiche einer Falte (86) nach oben zu drehen, die axial nach außen von den jeweiligen Wulstkernen (88) vorstehen, von einer axialen äußeren Seite zu einer axial inneren Seite der Wulstkernfixiereinrichtung (62, 66, 70), wobei die Falte (86) an einer äußeren Umfangsoberfläche des zentralen Heizbalgs (84) angebracht wird.

2. Reifenformtrommel nach Anspruch 1, wobei die Halteeinrichtung (22, 30) ein längliches zylindrisches Element (22) hat, um die zentrale Trommel (12) in einer vorbestimmten axialen Position der zentralen Trommel (12) zu halten.

3. Reifenformtrommel nach Anspruch 2, wobei die Halteeinrichtung (22, 30) Halteelemente (30) hat, die auf einer äußeren Umfangsoberfläche des hohlen, zylindrischen Elements (22) angebracht sind, so daß sie die zentrale Trommel (12) auf solch eine Weise halten, daß der zentralen Trommel (12) ermöglicht wird, sich nur in der radialen Richtung zu bewegen.

4. Reifenformtrommel nach Anspruch 1, wobei die Wirkeinrichtungen (28) in den Halteeinrichtungen (22, 30) angebracht sind.

5. Reifenformtrommel nach Anspruch 4, wobei die Wirkeinrichtungen (28) durch Schraubenfedern dargestellt werden.

6. Reifenformtrommel nach Anspruch 1, wobei die Gleitbasenbewegungseinrichtung (16, 18, 20, 36) eine Antriebswelle (16) hat, zum Übertragen einer Rotationsantriebskraft von einer externen Antriebsquelle auf die Gleitbasen (32).

7. Reifenformtrommel nach Anspruch 6, wobei die Antriebswelle (16) ein Rechtsgewinde (18) und ein Linksgewinde (20) hat, die in einer Längsrichtung der Antriebswelle (16) nebeneinander liegen.

8. Reifenformtrommel nach Anspruch 7, wobei die Gleitbasenbewegungseinrichtung (16, 18, 20, 36) ein Paar von Elementen (36) mit Innengewinde hat, die jeweils mit den Gleitbasen (32) verbunden sind, wobei eines des Paars von Elementen mit Innengewinde (36) mit dem Rechtsgewinde (18) zusammenpaßt und das andere des Paars von Elementen mit Innengewinde mit dem Linksgewinde (20) zusammenpaßt.

9. Reifenformtrommel nach Anspruch 6, wobei die Antriebswelle (16) auf solch eine Weise angebracht ist, daß sie in ein längliches, hohles zylindrisches Element (22) eingefügt wird, das in den Halteelementen (22, 30) vorgesehen ist.

10. Reifenformtrommel nach Anspruch 1, wobei jede der Wulstkernfixiereinrichtungen (62, 66, 70) eine Vielzahl von ersten Gleitblöcken (66) hat, die in vorbestimmten Intervallen entlang einer Umfangsrichtung des zentralen Heizbalgs (84) vorgesehen sind, wobei jeder der Vielzahl der ersten Gleitblöcke (66) auf solch eine Weise vorgesehen ist, daß er nur entlang einer radialen Richtung des zentralen Heizbalgs (84) bewegbar ist, und eine Walze (70) hat, die drehbar in einer Nähe eines radialen inneren Endes von jedem der Vielzahl der ersten Gleitblöcke (66) gehalten wird.

11. Reifenformtrommel nach Anspruch 10, wobei jeder der Wulstkernfixiereinrichtungen (62, 66, 70) einen ersten Kolben (62) umfaßt, der eine kegelförmige Oberfläche (62A) hat, die in der Lage ist, die Walzen (70) zu berühren, wobei die Walzen (70) geeignet sind, sich auf der kegelförmigen Oberfläche (62A) zu bewegen, wenn sich der erste Kolben (62) bewegt.

12. Reifenformtrommel nach Anspruch 1, wobei die Seitentrommeldurchmesser-Vergrößerungsvorrichtung (44, 46, 50, 52, 54) eine Vielzahl von zweiten Gleitblöcken (52) umfaßt, die in Übereinstimmung mit jeweiligen der Vielzahl von Segmenten (14A, 14B) der Seitentrommel (14) vorgesehen sind, wobei die Vielzahl der zweiten Gleitblöcke (52) bewegbar nur in einer radialen Richtung der Seitentrommel (14) vorgesehen sind.

13. Reifenformtrommel nach Anspruch 12, wobei die Seitentrommeldurchmesser-Vergrößerungseinrichtung (44, 46, 50, 52, 54) einen zweiten Kolben (44) umfaßt zur Bewegung der Vielzahl der zweiten Gleitblöcke (52) in der radialen Richtung der Seitentrommel, wenn sich der zweite Kolben (44) in einer Richtung parallel mit einer Achsenrichtung der Seitentrommel (14) bewegt.

14. Verfahren zur Herstellung eines Reifenrohlings, umfassend:
Vorsehen einer Reifenformtrommel (10), umfassend: eine zentrale Trommel (12), die in eine Vielzahl von Segmenten (12A, 12B) in eine Umfangsrichtung unterteilt ist, und in der Lage ist, sich auszudehnen oder zusammenzuziehen in einer radialen Richtung; ein Paar von Seitentrommeln (14), die jeweils neben beiden axialen Seiten der zentralen Trommel (12) liegend vorgesehen sind und jeweils in eine Vielzahl von Segmenten (14A, 14B) in der Umfangsrichtung unterteilt sind, wobei das Paar von Seitentrommeln (14) in der Lage ist, sich in der radialen Richtung auszudehnen oder zusammenzuziehen, und in der Lage ist, in eine radiale innere Seite der zentralen Trommel (12) eingefügt zu werden; einen zentralen Heizbalg (84), der in einer hohlen, zylindrischen Form auf solch eine Weise gebildet ist, daß er äußere Umfangsoberflächen der zentralen Trommel (12) und der Seitentrommel (14) bedeckt und er radial nach außen von der zentralen Trommel (12) von einem Zustand aufblasbar ist, in dem der zentrale Heizbalg (84) an den äußeren Umfangsoberflächen der zentralen Trommel (12) und den Seitentrommeln (14) haftend ist, wobei beide axialen Seiten des zentralen Heizbalgs (84) jeweils durch ein Paar von Gleitbasen (32) zum Halten des Paars von Seitentrommeln (14) gehalten werden; ein Paar von Wulstkernfixiereinrichtungen (62, 66, 70), die jeweils auf den Gleitbasen (32) vorgesehen sind und sich auf jeweiligen axialen Seiten des zentralen Heizbalgs (84) auf solch eine Weise befinden, daß sie in einer axialen Richtung bewegbar sind, wobei das Paar von Wulstkernfixiereinrichtungen (62, 66, 70) in der Lage ist, sich auszudehnen oder zusammenzuziehen, um ein Paar von ringförmigen Wulstkernen (88) darauf in einer radialen Richtung nach außen von den Wulstkernfixiereinrichtungen (62, 66, 70) zu halten; und ein Paar von Seitenheizbälgen (72), die in der Lage sind, sich auszudehnen oder zusammenzuziehen in der radialen Richtung, um diejenigen Endbereiche einer Falte (86) nach oben zu drehen, die axial nach außen von den jeweiligen Wulstkernen (88) vorstehen, von einer axialen äußeren Seite zu einer axial inneren Seite der Wulstkernfixiereinrichtungen (62, 66, 70), wobei die Falte (86) an der äußeren Umfangsoberfläche des zentralen Heizbalgs (84) angebracht ist;
einen ersten Schritt des Positionierens der Seitentrommeln (14) neben die jeweiligen axialen Seiten der zentralen Trommel (12), des Setzens der Außendurchmesser der zentralen Trommel (12) und der Seitentrommeln (14) auf einen im wesentlichen identischen Außendurchmesser, und des Anbringens einer ersten Karkassenfalte (86), die als eine Hochfalte dient, an einem äußeren Umfang des zentralen Heizbalgs (84), der in engem Kontakt mit den äußeren Umfangsoberflächen der zentralen Trommel (12) und der Seitentrommeln (14) gehalten wird, so daß jedes axiale Ende der ersten Karkassenfalte (86) sich in einer Position beabstandet mit einem vorbestimmten Abstand axial nach außen von der Wulstkernfixiereinrichtung (62, 66, 70) befindet;
einen zweiten Schritt des Platzierens jedes der Wulstkerne (88) über eine radiale äußere Oberfläche jeder der Wulstkernfixiereinrichtungen (62, 66, 70) über die erste Karkassenfalte (86), die an dem zentralen Heizbalg (84) angebracht ist, und der Vergrößerung eines Durchmessers von jeder der Wulstkernfixiereinrichtungen (62, 66, 70), so daß jeder der Wulstkerne (88) zusammen mit der ersten Karkassenfalte (86) in der radialen Richtung nach außen der Wulstkernfixiereinrichtung (62, 66, 70) fixiert wird;
einen dritten Schritt des Anbringens jedes eines Paars von Kernreitern (90) auf die befestigten Wulstkerne (88) in einer vorbestimmten Position davon;
einen vierten Schritt des Bewegens des Paars von Wulstkernfixiereinrichtungen (62, 66, 70) nach innen in der axialen Richtung, so daß der Abstand zwischen dem Paar von Wulstkernen (88) auf einen ersten vorbestimmten Abstand verkürzt wird;
einen fünften Schritt des Vergrößerns der Durchmesser der Seitentrommeln (14) und der zentralen Trommel (12) bis die äußeren Umfangsoberflächen der Seitentrommeln (14) und der zentralen Trommel (12) gegen eine innere Umfangsoberfläche der ersten Karkassenfalte (86) stoßen;
einen sechsten Schritt des nach oben Drehens in einer axialen Richtung nach innen der Wulstkernfixiereinrichtungen (62, 66, 70) jedes axialen Endbereichs der ersten Karkassenfalte (86), um den Wulstkern (88) mit dem Kernreiter (90) daran befestigt, indem jeder der Seitenheizbälge (72) aufgeblasen wird, so daß bewirkt wird, daß jeder Hochdrehbereich der ersten Karkassenfalte (86) gegen einen Hauptkörperbereich der ersten Karkassenfalte (86), den Wulstkern (88) und den Kernreiter (90) gepreßt wird und daran haftet;
einen siebten Schritt des Anbringen einer zweiten Karkassenfalte (94), der als eine Tieffalte dient, an der ersten Karkassenfalte (86), deren Endbereiche nach oben gedreht sind, so daß bewirkt wird, daß die gesamte zweite Karkassenfalte (94) gegen die erste Karkassenfalte (86) gedrückt wird, deren Endbereiche nach oben gedreht sind, und daran haftet;
einen achten Schritt des Anbringens eines Paars von Seitenlaufflächen (98) in vorbestimmten Positionen an einer äußeren Umfangsoberfläche der zweiten Karkassenfalte (94), haftend an der ersten Karkassenfalte (86);
einen neunten Schritt des Aufblasens des zentralen Heizbalgs (84), so daß die erste Karkassenfalte (86) und die zweite Karkassenfalte (94), die auf dem zentralen Heizbalg (84) übereinanderliegen, aufgeblasen werden, des Bewegens der Seitentrommeln (14) und des Paars der Wulstkernfixiereinrichtungen (62, 66, 70) in jeweiligen Richtungen axial nach innen, so daß der Abstand zwischen dem Paar von Wulstkernen (88) auf einen zweiten vorbestimmten Abstand verkürzt wird, wobei der zweite vorbestimmte Abstand kürzer ist als der erste vorbestimmte Abstand, und Ausdehnen oder Zusammenziehen von mindestens einer der zentralen Trommeln (12) und der Seitentrommeln (14), und Einfügen der Seitentrommeln (14) in die radiale innere Seite der zentralen Trommel (12), so daß den Wulstkernen (88) ermöglicht wird, sich einander zu nähern; und
einen zehnten Schritt des Anbringens eines Gürtels (100) und einer oberen Lauffläche (102) in einer vorbestimmten Position auf der aufgeblasenen zweiten Karkassenfalte (94), die auf der aufgeblasenen ersten Karkassenfalte (86) liegt.

15. Verfahren zur Herstellung eines Reifenrohlings nach Anspruch 14, wobei in dem zweiten Schritt der Durchmesser jeder der Wulstkernfixiereinrichtungen (62, 66, 70) so vergrößert wird, daß eine radiale äußere Oberfläche jeder der Wulstkernfixiereinrichtungen (62, 66, 70) sich radial nach außen von den radialen äußeren Oberflächen der zentralen Trommel (12) und der Seitentrommeln (14) befindet.

16. Verfahren zur Herstellung eines Reifenrohlings nach Anspruch 15, wobei jede der Wulstkernfixiereinrichtungen (62, 66, 70) eine Vielzahl von ersten Gleitblöcken (66) hat, die in vorbestimmten Intervallen entlang einer Umfangsrichtung des zentralen Heizbalgs (84) vorgesehen sind, wobei jeder der Vielzahl der ersten Gleitblöcke (66) auf solch eine Weise vorgesehen ist, daß er bewegbar entlang einer radialen Richtung des zentralen Heizbalgs (84) ist und eine Walze (70) hat, die drehbar in einer Nähe eines radialen inneren Endes von jedem der Vielzahl der ersten Gleitblöcke (66) gehalten wird, und wobei in dem zweiten Schritt distale Enden der Vielzahl der ersten Gleitblöcke (66) jeden der Wulstkerne (88) fixieren, wenn die Vielzahl der ersten Gleitblöcke (66) sich in der Richtung radial nach außen bewegen.

17. Verfahren zur Herstellung eines Reifenrohlings nach Anspruch 16, wobei jede der Wulstkernfixiereinrichtung (62, 66, 70) einen ersten Kolben (62) umfaßt, der eine kegelförmige Oberfläche (62A) hat, die in der Lage ist, die Walzen (70) zu berühren, und wobei in dem zweiten Schritt die Vielzahl der ersten Gleitblöcke (66) sich in der radialen Richtung nach außen bewegen, wenn jede der Walzen (70) sich auf der kegelförmigen Oberfläche (62A) in Verbindung mit der Bewegung des ersten Kolbens (62) bewegt.

18. Verfahren zur Herstellung eines Reifenrohlings nach Anspruch 14, wobei die Vergrößerung der Durchmesser der Seitentrommeln (14) und der zentralen Trommel (12) in dem fünften Schritt bewirkt wird, indem verursacht wird, daß axial gegenüberliegende Enden der Seitentrommeln (14) gegen korrespondierende axiale Enden der zentralen Trommel (12) stoßen, und indem die Seitentrommeln (14) in der radialen Richtung nach außen bewegt werden.

19. Verfahren zur Herstellung eines Reifenrohlings nach Anspruch 18, wobei in dem fünften Schritt der Durchmesser der Seitentrommeln (14) und der zentralen Trommel (12) so vergrößert werden, daß die radialen äußeren Oberflächen der zentralen Trommel (12) und der Seitentrommeln (14) sich radial nach außen von einer radialen äußeren Oberfläche von jeder der Wulstkernfixiereinrichtungen (62, 66, 70) befinden.

20. Verfahren zur Herstellung eines Reifenrohlings nach Anspruch 18, wobei die Seitentrommeln (14) und die zentrale Trommel (12) kegelförmige Oberflächen (12E, 12F, 14E) jeweils haben, und die kegelförmigen Oberflächen (14E) der Seitentrommeln (14) und die kegelförmigen Oberflächen (12E, 12F) der zentralen Trommel (12) auf solch eine Weise vorgesehen sind, daß sie in der Lage sind, gegeneinander zu stoßen und gleitbar in bezug aufeinander zu sein, und wobei die Näherung der Wulstkerne (88) zueinander in dem neunten Schritt durchgeführt wird, wenn die kegelförmigen Oberflächen (14E) der Seitentrommeln (14) und die kegelförmigen Oberflächen (12E, 12F) der zentralen Trommel (12) gegeneinander stoßen und in bezug aufeinander so verschoben werden, daß die Seitentrommeln (14) sich in einander nähernde Richtungen verschoben werden.

## Revendications

1. Tambour (10) de mise en forme de pneumatique, comprenant :
un tambour central (12) divisé en plusieurs segments (12A, 12B) dans la direction circonférentielle et qui peut se dilater ou se contracter en direction radiale,
une paire de tambours latéraux (14) disposés respectivement sous forme juxtaposée aux deux côtés axiaux dudit tambour central (12) et divisés chacun en plusieurs segments (14A, 14B) dans la direction circonférentielle, ladite paire de tambours latéraux (14) pouvant se dilater ou se contracter dans la direction radiale et pouvant être insérée à un côté radialement interne dudit tambour central (12),
un dispositif (22, 30) de support disposé coaxialement aux axes dudit tambour central (12) et desdits tambours latéraux (14) pour qu'il supporte ledit tambour central (12),
un dispositif (28) de rappel destiné à rappeler lesdits segments dudit tambour central (12) dans le sens dans lequel le diamètre dudit tambour central (12) est réduit en direction radiale,
une paire de bases coulissantes (32) destinées à supporter respectivement ladite paire de tambours latéraux (14) d'une manière telle que
ledits tambours latéraux (14) sont mobiles suivant une direction axiale dudit dispositif de support (22),
un dispositif (44, 46, 50, 52, 54) d' élargissement du diamètre de tambour latéral associé à chacune desdites bases coulissantes (32) pour augmenter et réduire le diamètre de chacun desdits tambours latéraux (14) dans la direction radiale par déplacement desdits segments de chacun desdits tambours latéraux (14) dans la direction radiale,
un dispositif (16, 18, 20, 36) de déplacement de bases coulissantes destiné à déplacer lesdites bases coulissantes (32) dans la direction axiale dudit dispositif de support (22, 30),
des premières parties évasées (14E) disposées respectivement aux extrémités desdits segments qui constituent ledit tambour latéral (14) opposé audit tambour central (12),
des secondes parties évasées (12E, 12F) disposées respectivement aux extrémités desdits segments constituant ledit tambour central (12) opposées à chacun desdits tambours latéraux (14), lesdites secondes parties évasées (12E, 12F) correspondant auxdites premières parties évasées (14E),
une vessie centrale (84) mise à une forme cylindrique creuse de manière qu'elle recouvre les surfaces périphériques externes dudit tambour central (12) et desdits tambours latéraux (14) et puisse être gonflée radialement vers l'extérieur dudit tambour central (12) depuis un état dans lequel ladite vessie centrale (84) est collée aux surfaces périphériques externes dudit tambour central (12) et desdits tambours latéraux (14), les deux côtés axiaux de ladite vessie centrale étant supportés respectivement par lesdites bases coulissantes (32),
une paire de dispositifs (62, 66, 70) de fixation de tringles disposés respectivement sur lesdites bases coulissantes (32) et placés sur les côtés axiaux respectifs de ladite vessie centrale (84) d'une manière telle qu'ils sont mobiles en direction axiale, ladite paire de dispositifs (62, 66, 70) de fixation de tringles pouvant se dilater ou se contracter pour supporter une paire de tringles (88) en direction tournée radialement vers l'extérieur dudit dispositif (62, 66, 70) de fixation de tringles, et destinés en outre à être mobiles vers l'intérieur dans la direction axiale vers une première position prédéterminée telle que la distance comprise entre les deux tringles (88) est réduite à une première distance prédéterminée, et en outre à être mobiles vers l'intérieur dans la direction axiale vers une seconde position prédéterminée telle que la distance comprise entre les deux tringles (88) est réduite à une seconde distance prédéterminée, ladite seconde distance prédéterminée étant inférieure à la première distance prédéterminée, et
une paire de vessies latérales (72) destinées respectivement à ladite paire de bases coulissantes (32) et qui peuvent se dilater ou se contracter dans la direction radiale pour replier les parties d'extrémité d'une nappe (86) qui dépasse axialement vers l'extérieur desdits tringles respectives (88), d'un côté axialement externe vers un côté axialement interne dudit dispositif (62, 66, 70) de fixation de tringles, ladite nappe (86) étant fixée à une surface périphérique externe de ladite vessie centrale (84).

2. Tambour de mise en forme de pneumatique selon la revendication 1, dans lequel ledit dispositif de support (22, 30) possède un organe cylindrique creux allongé (22) destiné à supporter ledit tambour central (12) à une position axiale prédéterminée dudit tambour central (12).

3. Tambour de mise en forme de pneumatique selon la revendication 2, dans lequel ledit dispositif de support (22, 30) possède des organes de support (30) disposés à une surface périphérique externe dudit organe cylindrique creux (22) pour supporter ledit tambour central (12) d'une manière telle que ledit tambour central (12) peut se déplacer uniquement en direction radiale.

4. Tambour de mise en forme de pneumatique selon la revendication 1, dans lequel ledit dispositif de rappel (28) est disposé dans ledit dispositif de support (22, 30).

5. Tambour de mise en forme de pneumatique selon la revendication 4, dans lequel ledit dispositif de rappel (28) est constitué par des ressorts hélicoïdaux.

6. Tambour de mise en forme de pneumatique selon la revendication 1, dans lequel ledit dispositif (16, 18, 20, 36) de déplacement des bases coulissantes possède un arbre d' entraînement (16) destiné à transmettre une force d'entraînement en rotation d'une source externe d'entraînement auxdites bases coulissantes (32).

7. Tambour de mise en forme de pneumatique selon la revendication 6, dans lequel ledit arbre d'entraînement (16) a une partie filetée avec un pas à droite (18) et une partie filetée avec un pas à gauche (20) qui sont juxtaposées dans la direction longitudinale dudit arbre d' entraînement (16).

8. Tambour de mise en forme de pneumatique selon la revendication 7, dans lequel ledit dispositif (16, 18, 20, 36) de déplacement de bases coulissantes a deux organes taraudés (36) couplés respectivement auxdites bases coulissantes (32), l'un des deux organes taraudés (36) étant en prise avec la partie filetée à pas à droite (18), un autre desdits deux organes taraudés étant en prise avec la partie filetée à pas à gauche (20).

9. Tambour de mise en forme de pneumatique selon la revendication 6, dans lequel ledit arbre d'entraînement (16) est disposé afin qu'il puisse pénétrer dans l'organe cylindrique creux allongé (22) placé dans ledit dispositif de support (22, 30).

10. Tambour de mise en forme de pneumatique selon la revendication 1, dans lequel un desdits dispositifs (62, 66, 70) de fixation de tringles possède plusieurs premiers blocs coulissants (66) placés à des intervalles prédéterminés dans la direction circonférentielle de ladite vessie centrale (84), chacun desdits premiers blocs coulissants (66) étant disposé afin qu'il soit mobile uniquement suivant une direction radiale de ladite vessie centrale (84) et ayant un rouleau (70) supporté afin qu'il tourne au voisinage de l'extrémité radialement interne de chacun desdits premiers blocs coulissants (66).

11. Tambour de mise en forme de pneumatique selon la revendication 10, dans lequel chacun desdits dispositifs (62, 66, 70) de fixation de tringles comporte un premier piston (62) ayant une surface évasée (62A) qui peut être en butée contre lesdits rouleaux (70), lesdits rouleaux (70) étant destinés à se déplacer sur la surface évasée (62A) lorsque ledit premier piston (62) se déplace.

12. Tambour de mise en forme de pneumatique selon la revendication 1, dans lequel ledit dispositif (44, 46, 50, 52, 54) d'élargissement du diamètre desdits tambours latéraux comprend plusieurs seconds blocs coulissants (52) disposés afin qu'ils correspondent à des segments respectifs parmi lesdits segments (14A, 14B) dudit tambour latéral (14), lesdits seconds blocs coulissants (52) étant disposés afin qu'ils soient mobiles uniquement dans la direction radiale dudit tambour latéral (14).

13. Tambour de mise en forme de pneumatique selon la revendication 12, dans lequel ledit dispositif (44, 46, 50, 52, 54) d'élargissement du diamètre desdits tambours latéraux comprend Un second piston (44) destiné à déplacer lesdits seconds blocs coulissants (52) dans la direction radiale dudit tambour latéral lorsque ledit second piston (44) se déplace en direction parallèle à la direction axiale dudit tambour latéral (14).

14. Procédé de fabrication d'un pneumatique non vulcanisé, comprenant :
la mise à disposition d'un tambour (10) de mise en forme de pneumatique qui comprend : un tambour central (12) divisé en plusieurs segments (12A, 12B) en direction circonférentielle et qui peut se dilater ou se contracter en direction radiale, deux tambours latéraux (14) disposés respectivement sons forme juxtaposée aux deux côtés axiaux dudit tambour central (12) et divisés chacun en plusieurs segments (14A, 14B) dans la direction circonférentielle, lesdits deux tambours latéraux (14) pouvant se dilater ou se contracter en direction radiale et pouvant être insérés d'un côté radialement interne dudit tambour central (12), une vessie centrale (84) formée avec une configuration cylindrique creuse de manière qu'elle recouvre les surfaces périphériques externes dudit tambour central (12) et desdits tambours latéraux (14) et puisse être gonflée radialement vers l'extérieur dudit tambour central (12) depuis un état dans lequel ladite vessie centrale (84) est collée aux surfaces périphériques externes dudit tambour central (12) et desdits tambours latéraux (14), les deux côtés axiaux de ladite vessie centrale (84) étant supportés respectivement par deux bases coulissantes (32) de support desdits deux tambours latéraux (14), deux dispositifs (62, 66, 70) de fixation de tringles disposés respectivement sur lesdites bases coulissantes (32) et placés sur des côtés axiaux respectifs de ladite vessie centrale (84) de manière qu'ils soient mobiles dans une direction axiale, lesdites deux dispositifs (62, 66, 70) de fixation de tringles pouvant se dilater ou se contracter pour supporter deux tringles annulaires (88) en direction radiale vers l'extérieur dudit dispositif (62, 66, 70) de fixation de tringles, et deux vessies latérales (72) qui peuvent se dilater ou se contracter dans la direction radiale afin qu'elles replient les parties d'extrémité d'une nappe (86) qui dépassent axialement vers l'extérieur des tringles respectives (88), d'un côté axialement externe vers un côté axialement interne dudit dispositif (62, 66, 70) de fixation de tringles, ladite nappe (86) étant fixée à une surface périphérique externe de ladite vessie centrale (84),
une première étape de positionnement desdits tambours latéraux (14) sous forme juxtaposée aux côtés axiaux respectifs dudit tambour central (12), de réglage des diamètres externes dudit tambour central (12) et desdits tambours latéraux (14) à un diamètre extérieur pratiquement identique, et de fixation d'une première nappe de carcasse (86) utilisée conmie nappe supérieure sur une périphérie externe de ladite vessie centrale (84) maintenue en contact intime avec les surfaces périphériques externes dudit tambour central (12) et ledits tambours latéraux (14), si bien que chaque extrémité axiale de la première nappe de carcasse (86) occupe une position placée à une distance prédéterminée axialement vers l'extérieur dudit dispositif (62, 66, 70) de fixation de tringles,
une seconde étape de disposition de chacune des tringles (88) sur une surface radialement externe de un desdits dispositifs (62, 66, 70) de fixation de tringles par l'intermédiaire de la première nappe de carcasse (86) fixée à ladite vessie centrale (84), et d' élargissement du diamètre de chacun desdits dispositifs (62, 66, 70) de fixation de tringles afin que chacune des tringles (88) soit fixée à la première nappe de carcasse (86) en direction radiale vers l'extérieur dudit dispositif (62, 66, 70) de fixation de tringles,
une troisième étape de fixation de chacune de deux jointes (90) de talon sur chacune des tringles fixes (88) en position prédéterminée de celle-ci,
une quatrième étape de déplacement desdits deux dispositifs (62, 66, 70) de fixation de tringles vers l'intérieur dans la direction axiale afin que la distance comprise entre les deux tringles (88) soit réduite à une première distance prédéterminée,
une cinquième étape d'élargissement des diamètres desdits tambours latéraux (14) et dudit tambour central (12) jusqu'à ce que les surfaces périphériques externes desdits tambours latéraux (14) et dudit tambour central (12) soient en butée contre une surface périphérique interne de la première nappe de carcasse (86),
une sixième étape de pliage axial vers l'intérieur dudit dispositif (62, 66, 70) de fixation de tringles de chaque partie d'extrémité axiale de la première nappe de carcasse (86) autour de la tringle (88) alors que la jointe (90) de talon est fixée à la tringle, par gonflage de chacune desdites vessies latérales (72) afin que chaque partie repliée de la première nappe de carcasse (86) soit poussée contre une partie principale de corps de la première nappe de carcasse (86), la tringle (88) et la jointe de bourrage de talon (90) et collée à celles-ci,
une septième étape de fixation d'une seconde nappe de carcasse (94), utilisée comme nappe descendante à la première nappe de carcasse (86), dont les parties d'extrémité sont repliées, afin que la totalité de la seconde nappe de carcasse (94) soit repoussée contre la première nappe de carcasse (86) dont les parties d'extrémité sont repliées et collées à cette nappe,
une huitième étape de fixation de deux bandes latérales de roulement (98) à des positions prédéterminées à une surface périphérique externe de la seconde nappe de carcasse (94) collée à la première nappe de carcasse (86),
une neuvième étape de gonflement de ladite vessie centrale (84) afin que la première nappe de carcasse (86) et la seconde nappe de carcasse (94) qui sont superposées à ladite vessie centrale (84) soient gonflées, de déplacement desdits tambours latéraux (14) et desdits deux dispositifs (62, 66, 70) de fixation de tringles en direction axiale respective vers l'intérieur afin que la distance comprise entre les deux tringles (88) soit réduite à une seconde distance prédéterminée, ladite seconde distance prédéterminée étant inférieure à la première distance prédéterminée, et de dilatation ou de contraction de l' un au moins desdits tambours central (12) et latéraux (14), et d'insertion desdits tambours latéraux (14) au côté radialement interne dudit tambour central (12) afin que les tringles (88) puissent se rapprocher, et
une dixieme étape de fixation d'une ceinture (100) et d' une bande supérieure de roulement (102) eu position prédéterminée sur la seconde nappe de carcasse gonflée (94) superposée à la première nappe de carcasse gonflée (86).

15. Procédé de fabrication d'un pneumatique non vulcanisé selon la revendication 14, dans lequel, dans la seconde étape, le diamètre de chacun desdits dispositifs (62, 66, 70) de fixation de tringles est élargi afin qu'une surface radialement externe de chacun desdits dispositifs (62, 66, 70) de fixation de tringles se trouve radialement à l'extérieur des surfaces radialement externes dudit tambour central (12) et desdits tambours latéraux (14).

16. Procédé de fabrication d'un pneumatique non vulcanisé selon la revendication 15, dans lequel chacun desdits dispositifs (62, 66, 70) de fixation de tringles a plusieurs premiers blocs coulissants (66) placés à des intervalles prédéterminés dans la direction circonférentielle de ladite vessie centrale (84), chacun desdits premiers blocs coulissants (66) étant réalisé afin qu'il soit mobile uniquement dans la direction radiale de ladite vessie centrale (84) et ayant un rouleau (70) supporté afin qu'il tourne au voisinage d'une extrémité radialement interne de chacun des premiers blocs coulissants (66), et dans lequel, dans la seconde étape, les extrémités externes desdits premiers blocs coulissants (66) fixent chacune des tringles (88) lorsque lesdits premiers blocs coulissants (66) se déplacent en direction radiale vers l'extérieur.

17. Procédé de fabrication d'un pneumatique non vulcanisé selon la revendication 16, dans lequel chacun desdits dispositifs (62, 66, 70) de fixation de tringles comporte un premier piston (62) ayant une surface évasée (62A) qui peut être en butée contre lesdits rouleaux (70) et dans lequel, dans la seconde étape, lesdits premiers blocs coulissants (66) se déplacent en direction radiale vers l'extérieur lorsque chacun desdits rouleaux (70) se déplace sur la surface évasée (62A) lors du déplacement dudit premier piston (62).

18. Procédé de fabrication d'un pneumatique non vulcanisé selon la revendication 14, dans lequel l'élargissement des diamètres desdits tambours latéraux (14) et dudit tambour central (12) dans la cinquième étape est réalisé par mise en butée des extrémités axialement opposées desdits tambours latéraux (14) et des extrémités axiales correspondantes dudit tambour central (12) et par déplacement desdits tambours latéraux (14) en direction radiale vers l'extérieur.

19. Procédé de fabrication d'un pneumatique non vulcanisé selon la revendication 18, dans lequel, dans la cinquième étape, les diamètres desdits tambours latéraux (14) et dudit tambour central (12) sont élargis afin que les surfaces radialement externes dudit tambour central (12) et desdits tambours latéraux (14) soient placées radialement à l'extérieur de la surface radialement externe de chacun desdits dispositifs (62, 66, 70) de fixation de tringles.

20. Procédé de fabrication d'un pneumatique non vulcanisé selon la revendication 18, dans lequel ledits tambours latéraux (14) et ledit tambour central (12) ont des surfaces évasées (12E, 12F, 14E), respectivement et les surfaces évasées (14E) desdits tambours latéraux (14) et les surfaces évasées (12E, 12F) dudit tambour central (12) sont réalisées afin qu'elles puissent être en butée mutuellement et puissent glisser mutuellement, et dans lequel le rapprochement des tringles (88) l'une vers l'autre dans la neuvième étape est réalisé lorsque les surfaces évasées (14E) desdits tambours latéraux (14) et les surfaces évasées (12E, 12F) dudit tambour central (12) sont mises en butée et glissent mutuellement afin que ledits tambours latéraux (14) se déplacent dans des directions qui les rapprochent mutuellement.
